(19) Europäisches Patentamt / European Patent Office / Office européen des brevets

(11) **EP 4 494 794 B1**

(12) **EUROPEAN PATENT SPECIFICATION**

(45) Date of publication and mention
of the grant of the patent:
**10.09.2025 Bulletin 2025/37**

(51) International Patent Classification (IPC):
**B27G 19/10** *(2006.01)* **B23D 45/10** *(2006.01)*
**B27B 5/075** *(2006.01)* **B23D 59/00** *(2006.01)*

(21) Application number: **24189026.8**

(22) Date of filing: **16.07.2024**

(52) Cooperative Patent Classification (CPC):
**B23D 45/105; B23D 59/002; B27B 5/075;
B27G 19/10**

(54) **METHOD FOR ALIGNING SAW BLADES**

VERFAHREN ZUM AUSRICHTEN VON SÄGEBLÄTTERN

PROCÉDÉ POUR ALIGNER DES LAMES DE SCIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.07.2023 IT 202300015147 U
15.07.2024 IT 202400016324 U**

(43) Date of publication of application:
**22.01.2025 Bulletin 2025/04**

(73) Proprietor: **Naldi, Valter
40137 Bologna (IT)**

(72) Inventor: **Naldi, Valter
40137 Bologna (IT)**

(56) References cited:
**EP-A1- 2 316 601    EP-A1- 3 263 258
EP-A2- 1 074 326    EP-B1- 2 477 776**

## Description

<u>TECHNICAL FIELD</u>

The invention relates to an operating method for the automatic alignment of the tools of a cutting machine.

In particular, the invention relates to a method for the correct alignment between a circular saw - or cutting blade - and a relative scorer, both used in a cutting assembly belonging to a cutting machine for panels or other materials that require the use of a cutting assembly of this kind.

In the industry of wood panel processing or the like, it is known to use cutting machines provided with a general frame, with a moving assembly to move stacks of panels towards a cutting station and with a cutting assembly, which is carried by a saw carriage and is able to cut the stack of panels crosswise.

The cutting assembly usually uses a cutting blade, which projects from a longitudinal slit obtained in a horizontal base integral to the frame, on which a generic panel or stack of panels to be cut is arranged, so as to cut said panel or stack of panels according to a vertical plane. In some cutting machine, during the cut, the stack is locked on the work plane of the cutting machine by pressing members.

As it is known, the cutting assembly comprises, in general, the aforesaid cutting blade, which is designed to cut the panel or the stack of panels along its entire height, and a scorer, which is also shaped like a circular blade, but has a diameter that is definitely smaller than the one of the cutting blade.

In some cutting machines, the scorer, as the cutting assembly moves towards the stack of panels (or as the panels move towards a group of fixed blades, in other cutting machines), slightly precedes the cutting blade so as to score the lower surface of the panel or of the stack of panels.

Making a score in the lower surface of the panel or of the stack of panels is necessary, especially for chipboard panels with high-value coatings, so as to allow the cutting blade to come out of the lower surface of the panel in direct contact with the work plane without the production of undesired chipping on the edges of the cut performed by the circular saw.

Therefore, the need to have optimal cuts on all the surfaces of the panels has led to the adoption, in the greatest part of the cutting machines, of the aforesaid scorer tools, which are designed to carry out the aforesaid scores so as not to chip the lips of the cut obtained on the lower surface of the panel in direct contact with the work plane.

The scorer usually rotates in a direction contrary to the one of the cutting blade and generally penetrates the lower panel for a couple of millimetres.

However, a problem arising in cutting assemblies of the type described above lies in the alignment of the cutting blade with the scorer. As a matter of fact, in order to obtain the desired effect, the cut made by the cutting blade must be inside the score produced by the scorer on the lower surface of the panel or of the stack of panels and, furthermore, said cut must be perfectly centred relative to the score. Furthermore, for a good cutting quality, which can be universally recognized as such, the width of the score made by the scorer must be merely slightly greater than the thickness of the blade, so that the difference between the width of the score and the one of the cutting blade is almost imperceptible. For this reason, scorers generally have teeth with a conical shape, namely with the top summit of the tooth narrower than its base (with both sides inclined towards the centre of the tooth, like the sides of an isosceles trapezoid), which, because of this very geometric characteristic, can be adapted to different thicknesses of the cutting blades depending on their scoring depth into the panel.

<u>PRIOR ART</u>

The horizontal alignment (to ensure that the cut of the blade is perfectly centred with the incision produced by the scorer) and vertical alignment (to ensure that the width of the incision is only a little wider than the cut produced by the cutting blade) of the scorer to perfectly align it with the cutting blade is normally carried out by hand by the operator making some test cuts. Therefore, there is a significant waste of time, if this operation has to be carried out every time the blade set needs to be changed. Moreover, automatic blade alignment methods are known, which do not require automatic or manual measurement of the characteristics of the tools used in the machine.

Patent EP3263258B1 discloses a method according to the preamble of claim 1, and in particular discloses a reading system, preferably using a laser beam, for reading all the characteristic data of the necessary tools and their exact positioning in the machine in order to then determine their perfect horizontal and vertical alignment in a completely automatic manner. The reading by means of laser assemblies is certainly effective, but extremely expensive given the need to carry out remote readings with considerable precision.

Other alignment systems use mechanical equipment that, by means of two mechanical plates that rest (when the blades are standing still) on the sides of the blade and scorer teeth, provides for the measurement, in the machine, of the thicknesses of the tools and/or of their relative axes, thus carrying out the horizontal alignment thereof in an automatic manner. However, these pieces of equipment, with the sole data acquired and due to their characteristics, are not able to achieve the correct vertical positioning/alignment of a scorer with a conical tooth shape that, because of this very geometric characteristic of its, can be adapted to different thicknesses of cutting blades depending on its scoring depth into the panel.

In fact, first of all, the detection plates are not able to detect the positioning of the conical tooth of the scorer relative to the work plane and, secondly, the reading between the plates is determined by the base of the hard metal plate that, with some types of teeth, is wider than the base of the actual cutting edge of the tooth.

Therefore, with this mechanical equipment, it is necessary for the operator to enter, into the numerical control, all those measurements needed for the correct vertical positioning of the scorer assembly. The necessary measurements will therefore be the diameter of the scorer, the width of the actual cutting edge of the summit of the tooth, the width of its base as well as the height of the tooth cutting edge (which, in case of a tooth with a trapezoidal profile, represents the distance between the smaller base at the summit of the tooth and the larger base of the cutting face, namely the distance between the two bases). From these measurements it is possible to calculate both the inclination of the tooth and the distance of the summit of the tooth or of its base from the centre of rotation of the tool, so that it can correctly be positioned in the machine, having previously calibrated its position relative to the work plane. Unfortunately, following the necessary sharpening due to normal wear, the diameter of the scorer, as well as the two previously measured dimensions of the tooth cutting edge (at its summit and base), are no longer the same since the normal removal of hard metal during sharpening affects both the front side of the cutting edge of the tooth and, sometimes, also the upper portion of the tooth. This sharpening modifies the height of the tooth (and, hence, also the positioning of its summit or tooth top and of the base of the tooth cutting edge relative to the centre of rotation of the tool) given the particular configuration of the hard metal plate. Therefore, every time a scorer is sharpened to be reinstalled in the machine, it must necessarily be remeasured in order to then enter the new data into the numerical control of the cutting machine.

Therefore, in the prior art we are faced with two solutions:

- a first fully automatic, but very expensive solution;
- a second solution, certainly inexpensive, but which requires more manual measurements with each use of the tools after sharpening.

## DESCRIPTION OF THE INVENTION

The operating method according to the invention is aimed at managing and processing the information relating to some characteristic parameters of the tools, which, together with a predetermined virtual plane with which to perform specific geometric calculations, lead, with a simple and economic detection system for performing the horizontal alignment of the tools, to the correct vertical positioning/alignment of the scorer with conical teeth, when coupled to any blade, even after repeated sharpening.

According to the invention, there is provided an operating method for the horizontal and vertical alignment of a scorer with a cutting blade, as defined by the features of claim 1.

Preferred embodiments are defined by the features of dependent claims 2-10.

## BRIEF DESCRIPTION OF THE DRAWINGS

The invention will be best understood upon perusal of the following description of some preferred embodiments, with reference to the following accompanying drawings:

- figure 1 schematically shows a cutting assembly of a cutting machine (not shown in its entirety) with a movable carriage or with a fixed carriage;
- figure 2 shows a cutting blade together with two forms of scorer with conical teeth: the solid line indicates a conical scorer with trapezoidal teeth and, on top of it, an alternate conical scorer with the upper profile of the teeth indicated by a broken line;
- figure 3 shows a cutting blade and a scorer with trapezoidal teeth with a system of feelers associated with the Numerical Control of the cutting machine and designed to measure the respective thicknesses of the teeth and of their relative axes relative to a reference plane;
- figure 4 shows a typical scorer used in cutting machines taken from a common catalogue of tools;
- figure 5 shows a portion of the scorer shown in figure 4, highlighting the hard metal plate that constitutes the tooth thereof;
- figure 6 shows a front view of the entire tooth of the scorer highlighted in figure 5;
- figure 7 shows a side view of entire tooth of the scorer highlighted in figure 5, and
- figure 8 shows a view from the top of the tooth of the scorer of figure 5.

PREFERRED EMBODIMENT OF THE INVENTION

In the accompanying figures, number 10 indicates a cutting assembly belonging to a cutting machine 1 (not shown in its entirety, for the sake of simplicity).

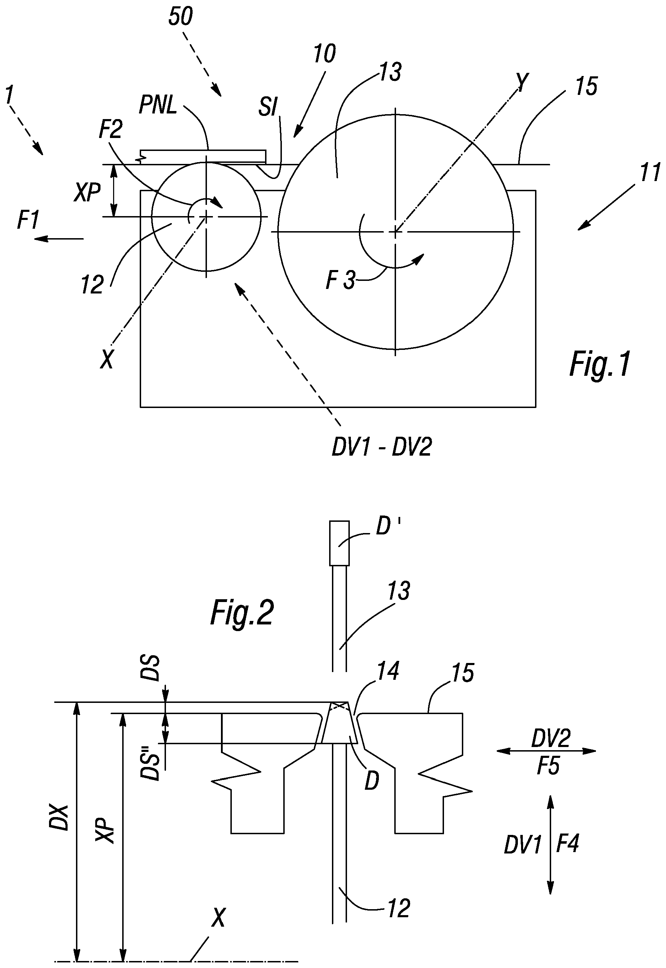

The cutting assembly 10 comprises, in turn, a saw carriage 11 (figure 1), which, during the cut, moves according to an arrow F1, but, in some machines, is fixed, while the panel moves according to an arrow contrary to F1, on said saw carriage 11 there being mounted a scorer 12 (which, in use, rotates around a central axis X according to an arrow F2), followed by a cutting blade 13 (which, in use, rotates around an axis Y according to an arrow F3). As it is known, the scorer 12 and the cutting blade 13 usually rotate in opposite directions.

The scorer 12 and the cutting blade 13 both project from a slit 14 made in a work plane 15 of the cutting machine 1 (figure 2). On the work plane 15 there are a panel PNL or a stack of panels to be cut (figure 1), possibly pushed on the work plane 15 by a pushing assembly (not shown).

As it is known, the purpose of the scorer 12 is that of creating a score SI (figure 1) in the lower surface of the panel PNL resting on the work plane 15, said score SI having to be perfectly aligned with the blade 13 during the actual cut of the panel PNL. Furthermore, the score SI made in the lower surface of the panel PNL in the area of a scoring plane, which substantially coincides with the work plane 15, must be a little larger than the thickness of the blade 13 during the cut.

The rotations of the scorer 12 and of the cutting blade 13 are obtained by means of known moving means, which are not shown in the figures.

The cutting assembly 10 further comprises the following devices:

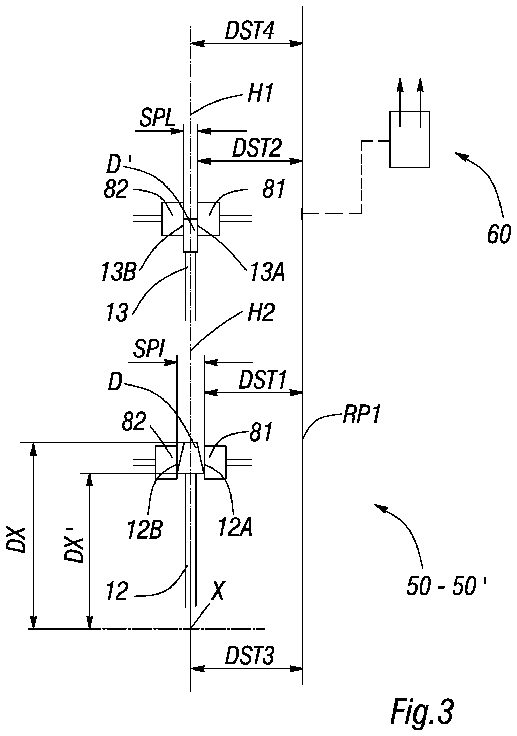

(1) an electronic control unit 60 (figure 3), which is electronically connected to a measuring system 50 (preferably, though not necessarily, a mechanical, laser, LED, etc. system), which is preferably designed and positioned so as to measure a distance DST2 of the tooth D' of the cutting blade 13 and a distance DST1 of the tooth D of the scorer 12 relative to a common reference plane RP1 and so as to measure the thicknesses SPI, SPL of the respective teeth D, D' of the aforesaid scorer 12 and cutting blade 13; said electronic control unit 60 can be completely independent or it can be part of the Numerical Control of the cutting machine 1. The electronic control unit 60 can also be programmed so as to generate data that is transferred, manually or through computer means, to the Numerical Control of the cutting machine 1; the electronic control unit 60 can coincide with the Numerical Control of the cutting machine; the electronic control unit 60 or the Numerical Control of the cutting machine can receive and store some characteristic data of the tools that is manually measured and entered by the operator in order to be later retrieved during its actual use in the machine;

(2) a first moving device DV1, which enables the vertical movements of the scorer 12 along a vertical axis in a direction and in verses indicated by a double-headed arrow F4 (figure 2);

(3) a second moving device DV2, which enables the lateral/horizontal movements of the scorer 12 along a horizontal axis in a direction and in verses indicated by a double-headed arrow F5 (figure 2).

As usual, the sole scorer 12 is provided with known adjusting and operating means and it can be moved vertically (arrow F4) and/or laterally/horizontally (arrow F5), whereas the cutting blade 13 usually is fixed relative to the saw carriage 11.

Figure 3 also shows a central axis H1 of the teeth D' of the cutting blade 13 and a central axis H2 of the teeth D of the scorer 12.

The cutting blade 13 is provided with a plurality of straight teeth D' (figure 2), which means that they have a basically constant cross section. The scorer 12 is provided, in turn, with a plurality of teeth D with a conical cross section. In this type of scorer, the scoring width on the panel PNL can change depending on the thickness of the tooth D in correspondence with the work plane 15. Therefore, it is clear that a precise adjustment of the vertical position of the scorer 12 along its central axis H2 and in a direction and in verses F5 is crucial to define an optimal width of the score SI made in the panel PNL.

The cutting unit 10 also preferably comprises a detection system 50 for measuring some characteristic data of the cutting blade 13 and of the scorer 12, whose structure is not relevant for the purposes of the method disclosed herein; said system 50, in fact, can be chosen among different devices or combinations of devices known in the industry.

A known apparatus 50 for the correct horizontal alignment of the scorer 12 with the cutting blade 13 preferably comprises:

- a first feeler 81 (figure 3) for detecting the distance DST1 of a first face 12A of the tooth D of the scorer 12 and the distance DST2 of a first face 13A of the tooth D' of the cutting blade 13 from a reference plane RP1 parallel to the central axis H1; and

- a second feeler 82 for detecting a second face 12B of the tooth D of the scorer 12 and a second face 13B of the tooth D' of the cutting blade 13 relative to the first reference plane RP1 (or, possibly, also relative to a second reference plane with a known position with respect to RP1), which determine the relative thickness SPL of the tooth D' of the blade 13 and the relative thickness SPI of the tooth D of the scorer 12.

The central axes H1 of the blade 13 and H2 of the scorer 12, respectively, can easily be calculated by adding half the respective thicknesses SPL and SPI of the teeth D' of the cutting blade 13 and of the teeth D of the scorer 12 to the relative distances DST2 and DST1.

In a second known apparatus 50' (figure 3), the two feelers 81, 82 measure neither any thickness SPL, SPI of the teeth D', D of the cutting blade 13 and of the scorer 12 nor the respective distances DST2, DST1 relative to the common reference plane RP1, but only respective distances DST4, DST3 between the reference plane RP1 and respective central axes H1, H2 of the teeth D', D of the cutting blade 13 and of the scorer 12. In this second apparatus 50', the two feelers are connected to a self-centring lever, which determines the perfect middle line of the teeth D', D of the tools and, therefore, the relative distances DST4, DST3 of the central axes H1, H2 relative to the common reference plane RP1.

With both apparatuses 50 and 50' disclosed above, the consequent horizontal alignment, aimed at having the central axes H1 and H2 coincide, takes place by adequately moving the relative device DV2 in the direction and in the verses indicated by the double-headed arrow F5.

Other apparatuses (possibly, even external to the cutting machine 1) or other methods or systems for horizontally aligning the respective central axes H1, H2 of the teeth D', D of the cutting blade 13 and of the scorer 12 can be used without, however, going beyond the scope of protection set forth by this invention.

In case of scorers 12 with conical teeth D, the alignment is completed with a further step of vertical adjustment/movement of the scorer assembly by means of an appropriate movement of the moving device DV1 in the direction and in the verses indicated by the double-headed arrow F4 to determine the correct scoring width SI on the work plane 15 of the tooth D of the scorer 12 as a function of the thickness of the teeth D' of the cutting blade 13 detected by the detection system 50 or manually entered in case of use of the second detection system 50' or of other systems.

For the sake of clarity, it should be pointed out that the difference between a conical scorer and an alternate conical scorer (or any other scorer with teeth whose combined profile during rotation produces a score with a conical shape) is not relevant for the purposes of this document and of the alignment method disclosed herein. In fact, for conical scorer, it is intended any scorer whose actual upper cutting width edge at the summit or at the top of the tooth is narrower than the actual cutting width edge at its base. In the current terminology, a conical trapezoidal scorer generally is a scorer whose teeth have the shape of an isosceles trapezoid. In the current terminology, again, an alternate conical scorer is a conical scorer where the base of the tooth and its lateral sides replicate the base and the sides of an isosceles trapezoid, while its upper edge is not parallel to the base, but alternately inclined to the right and to the left by about five to ten degrees to facilitate cutting on particular materials. Figure 2 shows, with a broken line, the upper edges of an alternate conical scorer where the upper edge of one tooth is inclined towards one of the sides of the tooth while the edge of the next tooth is inclined towards the opposite side. Obviously, the combined action of the teeth or the cutting edges of the teeth during cutting produces a score that is completely equivalent to that of a tooth with a trapezoidal profile of the same size, since the distance between the summit of the cutting edges of the teeth during rotation is equivalent to the size of the smaller base of a similar conical/trapezoidal tooth. This also applies to teeth with special profiles, whose combined action during cutting produces a score that is completely equivalent to that of a tooth with a conical/trapezoidal profile of the same size. Therefore, in the continuation of this document, the expression "scorer with conical teeth" indicates any scorer whose combined action of the teeth during rotation produces an actual score with a conical shape. In view of the above, in the continuation of this document, reference will be made, for the sake of simplicity, to the sole conical/trapezoidal profile of the tooth D of the scorer 12, hence considering, in the terminology, its smaller base at the summit of tooth D and its larger base at the base of tooth D.

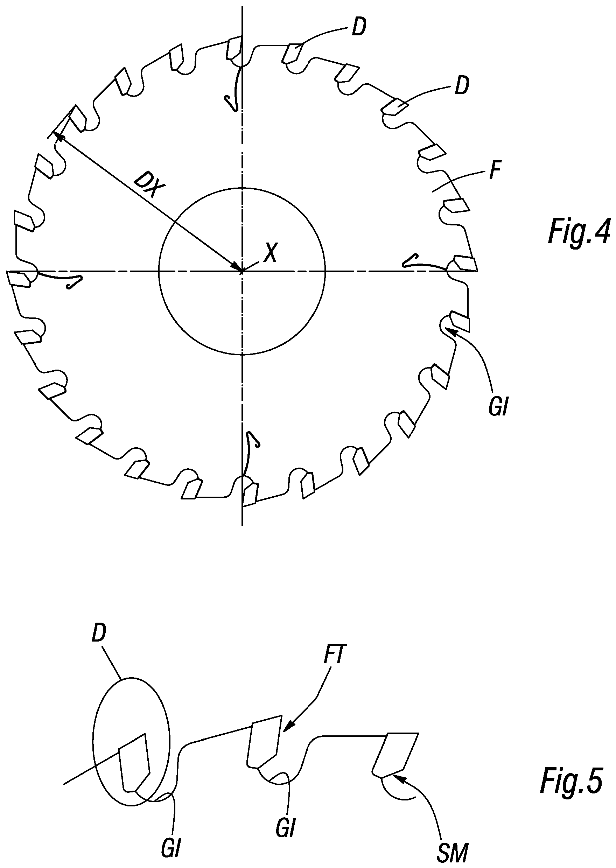

For this purpose, reference is thus made to figures 4, 5, which show a typical scorer 12 with teeth D with a conical/trapezoidal profile taken from a common catalogue of tools of the industry.

As shown in figures 4 and 5, the individual teeth D of the scorer 12 consist of individual hard metal plates welded to a body F (figure 4) of the scorer 12. It should be pointed out, in particular, that each single tooth D corresponds to a dedicated tooth throat GI (figures 4, 5) for the correct discharge of the chip produced during the scoring SI of the panels PNL. Said tooth throat GI also partly affects the tooth D, which must properly be connected to the respective tooth throat GI by means of a suitable chamfer SM (figure 5).

As described above, in order to carry out a first alignment with a new scorer, in the prior art, the operator enters into the numerical control all those measurements needed for the correct vertical positioning of the scorer assembly. The necessary measurements are therefore the diameter of the scorer 12, the width of its smaller base (basically, of the actual cutting edge at the summit of the tooth D), the width of the larger base of the tooth D (basically, of the actual cutting edge at the base of the tooth) as well as the height of the tooth, namely the distance between the summit of the tooth D and its larger base at its base. From these measurements it is possible to calculate both the inclination of the lateral sides of the tooth and the distance of the smaller base or of the larger base of the tooth relative to the centre of rotation of the tool, in order to correctly position it in the machine. It is obvious that, knowing the angle of inclination of the lateral sides of the tooth a priori, some measurements could be superfluous, such as for example the width of the larger base (or of the smaller base) of the tooth and the height of the tooth.

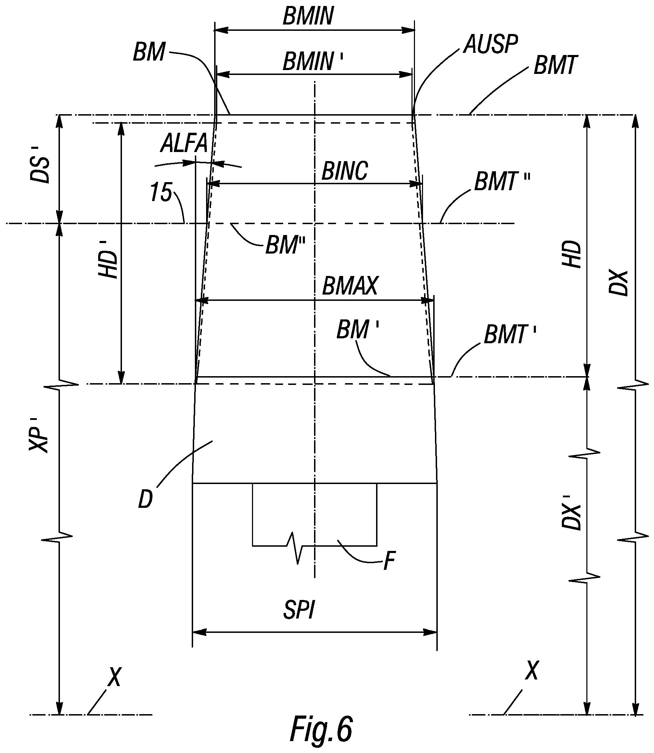

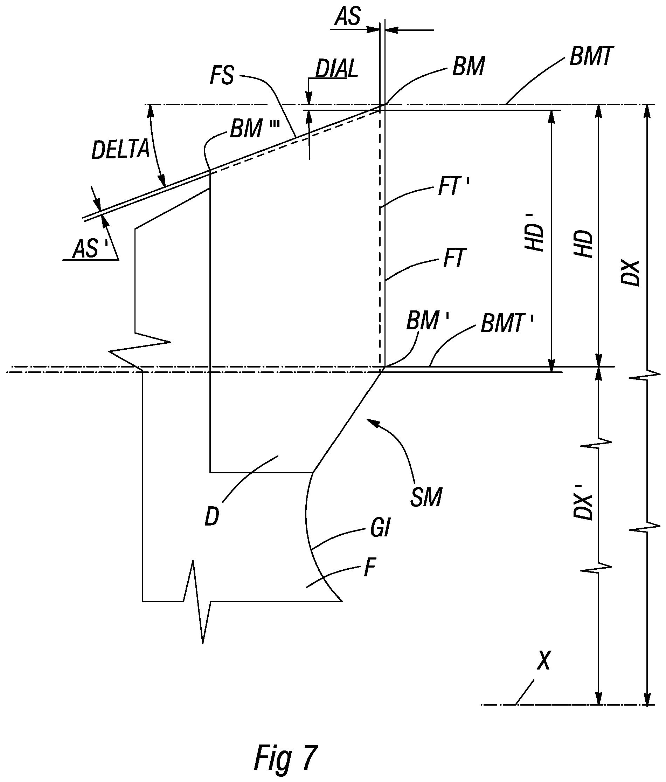

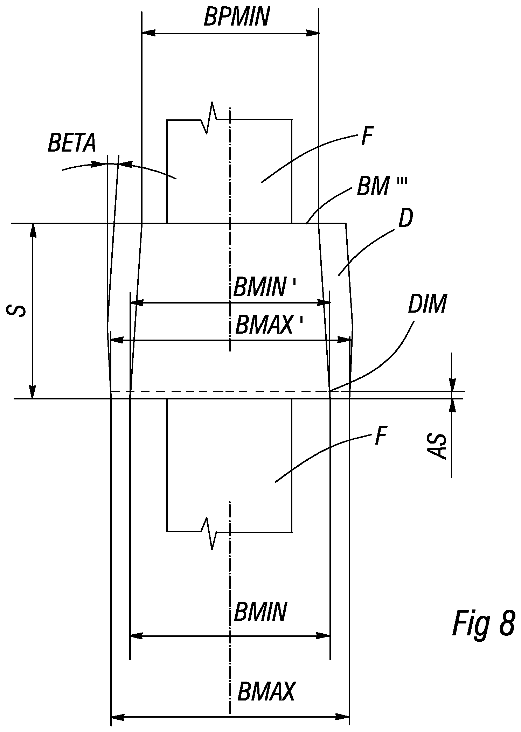

In view of the above and in accordance with this invention, it is established that, while entering said measurements upon first use of a new, properly identified scorer, a virtual plane BMT (figures 6, 7) is defined and stored, together with the other previously entered pieces of data, which passes through a first edge BM (figures 6, 7) at the summit of the tooth D having a width BMIN (figures 6, 8) of a cutting face FT of a tooth D (figure 7). The first edge BM is a segment whose width BMIN is known. It should be pointed out that said edge BM with a width BMIN equivalent to the smaller base of a tooth of a conical/trapezoidal scorer is equivalent to the distance between the summits of the teeth of an alternate conical scorer (or of another similar type) during its relative rotation, as clearly shown in figure 2 (similarly, the edge BM' with width BMAX could also have a similar equivalence).

The cutting face FT (or the combination of the cutting edges of several cutting faces FT during the rotation of the scorer 12) constitutes in all respects the actual cutting edge (resulting cutting face FT) of the tooth (or teeth) D of the scorer 12.

The virtual plane BMT passing through the first edge BM at the summit of the tooth D is perpendicular to the cutting face FT at a distance DX (figures 4, 6, 7) from the centre of rotation X of the scorer 12 (centre of rotation X obviously coinciding with the centre of rotation of the scorer assembly of the cutting assembly of figure 1). Therefore, the distance DX between the virtual plane BMT or the summit of the tooth D and the centre of rotation X of the scorer 12 can easily be obtained, one first single time, by dividing the equally easy measurement of the diameter of the scorer 12 (if not indicated in the manufacturer's data) by two. The virtual plane BMT can further be defined in spacial terms with reference to the work plane 15 (figure 1), as explained below.

The virtual plane BMT could also be entered upon first use of a specific scorer 12 after the first sharpening, having already appropriately stored the related characteristic data, which must obviously include data that is decisive for the definition of said virtual plane BMT (see below).

Alternatively, a similar virtual plane BMT' (figures 6, 7) could also be defined, always perpendicular to the cutting face FT of the tooth D of the scorer 12. This alternative virtual plane BMT' passes through a second edge BM' with width BMAX of the cutting face FT at the base of the cutting edge of the tooth D. The distance DX' of this alternative virtual plane BMT' from the centre of rotation X can be obtained by subtracting the height HD (figures 6, 7) of the cutting face FT of the tooth D, which can also be measured, from the aforementioned distance DX. The alternative virtual plane BMT' can also be defined in spatial terms or in relation to the centre of rotation X or with reference to the working plane 15.

The virtual plane BMT (or the alternative virtual plane BMT') with distance DX from the centre of rotation X (or with distance DX' from the centre of rotation X) represents a characteristic and unique piece of data of each scorer 12 mounted in the machine and will be properly stored and used throughout the life of that scorer 12 in association with other characteristic data provided by the manufacturer or detected with any instrument or instrumentation, namely a lateral angle ALPHA (figure 6) of the trapezoidal tooth D, a lateral rake angle BETA (figure 8) representing the rake angle of the tooth D of the scorer 12 and, possibly, the width BMAX of the second edge BM' (figure 6) of the cutting face FT (figure 6). The second edge BM' also is a segment whose width BMAX, possibly, is known and which lies at the lower end of the cutting face FT.

The lateral angle ALPHA, if not known, can also be determined through a simple calculation having both the measurements of the edges BM and BM' of the cutting face FT of the trapezoidal tooth D (namely, its smaller base with width BMIN and its larger base with width BMAX) and the distance between the two bases, namely the height HD (figure 7) of the cutting face FT of the tooth D.

The lateral rake angle BETA, if unknown, can be determined through a simple calculation having, or detecting, the further measurements BPMIN and S (figure 8) of a third rear edge BM''' of the cutting face FT of the tooth D and of the other thickness S of the tooth D in the direction of rotation of the scorer 12 (figure 8), respectively, in association with an angle DELTA (figure 7) of inclination of an upper face FS of the tooth D.

As mentioned above, a similar virtual plane alternative to the BMT plane also consists of the plane BMT' (figures 6, 7), also perpendicular to the cutting face FT that crosses the second edge BM', as it has the same unique characteristic in association with the other characteristic data, such as the angles ALPHA and BETA.

In some cutting machines, the vertical movement of the scorer 12 is performed by an actual axle controlled by the numerical control of the cutting machine. This solution obviously implies that the device DV1 for the vertical adjustment of the scorer 12 coincides with the vertical moving device of the scorer 12 for its normal operation during the cutting steps.

In other cutting machines, the position of the centre of rotation of the scorer assembly relative to the work plane 15 can be detected by means of tests with sample scorers and stored for future use on the basis of a fixed calibration position.

Basically, since the distance XP (figures 1, 2) of the rotation axis X of the scorer 12 relative to the work plane 15 can be known or anyway detectable, a distance DS between the summit of the tooth D and the work plane 15 and/or a distance DS" between the base of the cutting edge of the tooth D and the work plane 15 (figure 2) are also known in practice as a function of the available and/or measured characteristic data.

As all the different positions assumed by the scorer 12 relative to the working plane 15 when mounted in the machine are known, it is therefore possible to relate these positions to the virtual plane BMT (or to a similar virtual plane BMT') on the tooth D of the scorer 12. Basically, it is possible to relate the virtual plane BMT (or the virtual plane BMT') to the work plane 15.

In some cases, the layout of the tooth D with a trapezoidal profile, due to the lateral inclination of the tooth with a lateral angle ALPHA, determines a thickness SPI (figure 6) at the base of the tooth D that is greater than the width BMAX of the second edge BM' of its cutting face FT, despite a certain removal of the base of the tooth D due to the chamfer SM.

This is the reason why the first apparatus 50 is not able to detect, with these given types of layout, the exact width BMAX of the second edge BM' of the cutting face FT of the tooth D of the scorer 12, while it obviously is able to do so with other types of layout where the chamfer SM and the lateral rake angle BETA of the tooth D determine a thickness SPI that is smaller than the width BMAX on the cutting face FT.

Hence, having manually or automatically detected the thickness SPL of the cutting blade 13 and having manually detected the width BMIN of the first edge BM (or the width BMAX of the second edge BM') of the cutting face FT of the tooth D of the scorer 12 and its relative distance DX (or DX') from the centre of rotation X of the scorer 12 coinciding with the centre of rotation X of the cutting assembly of Figure 1 and knowing the lateral angle ALPHA of the tooth D with a trapezoidal profile, it will be easy to calculate the displacement to which the position of the scorer 12, when mounted in the machine, must be subject in order to obtain the desired scoring width SI (Figure 1) on the work plane 15 compatible with the thickness SPL (Figure 3) of the tooth D' of the relative blade 13.

As it is known, the use of the tools 12, 13 causes their wear and, therefore, the need for their sharpening, which, in case of a scorer 12 with a conical tooth D of the type used herein, is always carried out on the cutting face FT (figure 7) of the tooth D of the scorer 12, removing a given amount of material with thickness AS, (figures 7, 8) which generally is in the range of 0.10 - 0.20 mm.

Sometimes, depending on the wear of the tooth D, an upper face FS (figure 7) of the tooth D could be subject to a trimming operation, by means of which a very thin upper layer AS' of material is removed (figure 7). This additional removal (trimming) of material is almost indeterminable since, in some cases, it could be a modest removal just to clean, in fact, the upper face FS of the tooth D of the scorer 12.

Figures 6 and 7 clearly show that, following a sharpening, the edges BM and BM' change their distance from the centre of rotation X of the scorer 12.

This is why, with each new sharpening, in the current and most common state of the art of systems for aligning the tools 12, 13, it is necessary to remeasure the diameter of the scorer 12 and the new height HD' of the tooth D as well as the new widths of the first edge BM and of the second edge BM' of a new cutting face FT' of the tooth D, which will necessarily have new dimensions and a new position following the sharpening.

In view of the above, with the new method provided for herein, it is established that, following a sharpening of the teeth of the scorer 12, on the virtual plane BMT (the same as before the sharpening) always at the original distance DX from the centre X of rotation of the scorer 12, a new virtual width BMIN' (figure 8) is recalculated, which allows new vertical alignment positions to be calculated in order to obtain a scoring width SI (figure 1) on the work plane 15 that is compatible with the thickness SPL of the tooth D' of the cutting blade 13, to which that same scorer must be paired in the machine.

In the same way and alternatively, it is possible to identify a similar plane BMT' at the distance DX' from the centre of rotation X, which allows operators to similarly perform the calculations for a new vertical positioning of the scorer assembly.

The virtual character of the plane BMT (and of the relative edge BM) is clearly visible in figures 6 and 7, where it can be seen that, already after the first sharpening, the plane BMT (with the relative edge BM) finds itself totally on the outside of the sharpened tooth D. The same virtual character can be found in the alternative plane BMT' (and in the relative edge BM'), which, already following the first sharpening, also finds itself in an intermediate and indefinite position between the new smaller and larger bases of the cutting face FT' of the cutting edge of the tooth D of the scorer 12.

In other words, since the very first sharpening, the planes BMT and BMT' and the relative edges BM and BM' are no longer in their original position or cannot physically be identified. For this reason, in this context, the adjective "virtual" is used for these planes and for those that will be described below.

However, it should also be pointed out that, during any sharpening, the angles ALPHA and BETA (figures 6, 8), namely the lateral angle and the rake angle, respectively, of the tooth D of the scorer 12 do not change and, therefore, remain unaltered and identical to the values previously set throughout the use of that particular scorer 12.

Now a FIRST practical EXAMPLE will be discussed, wherein in the machine there is mounted a new, properly identified scorer 12, with the following characteristic data:

BMIN = 3.85 mm
BMAX = 4.60 mm
DX = 90.0 mm
BETA = 3.82°
ALPHA = 4.25°

XP = 87.50 mm = Known or calibration distance of the centre of rotation of the scorer spindle assembly on the saw carriage relative to the work plane 15 (figures 1, 2). Obviously, this distance corresponds to a distance DS of 2.5 mm between the smaller base with width BMIN and the work plane 15 in the calibration position of the scorer 12.

SPL = 4.0 (thickness of the cutting blade, to which the scorer with the aforementioned characteristics is paired)

By entering this data, we establish that our virtual plane BMT to be used for a subsequent alignment of this scorer following a sharpening passes through the summit of the tooth D and, hence, through the smaller base of the tooth with width BMIN at a distance DX of 90 mm from the axis X.

Therefore, this plane BMT with the relative, previously entered data is properly stored in association with this scorer.

With this data, we first define a target amount of increase in the score SI with respect to the thickness SPL of the tooth D' of the cutting blade 13, which, in this case, is considered to be 0.10 mm, namely 0.05 mm per side.

Hence, a target thickness BINC (figure 6) on the face FT of the cutting edge of the tooth D basically equivalent to the width of the score SI on the work plane 15 for this FIRST EXAMPLE must be 4.10 mm overall.

As far as the horizontal alignment between the blade 13 and the scorer 12 is concerned, the apparatus 50, 50' or other similar system or method will then align their central axes H1 and H2 in a known manner.

The apparatus 50 also automatically detect the thickness SPL of the tooth D' of the cutting blade 13, while, in case the apparatus 50' is used, this measurement must be detected in another way and entered into the Numerical Control of the cutting machine.

With the acquired data we calculate at what distance DS' (figure 6) from the smaller base of the tooth with width BMIN we find a segment BM" with a target thickness BINC of the tooth D of 4.10 mm; this target thickness BINC, as mentioned above, represents the target width of the score SI on the work plane 15 (figure 1).

We use, in the calculations, half of this width BMIN/2 = 1.925 mm and of the target thickness BINC/2 = SI/2 = 2.05 mm to identify a right triangle whose base is 2.05 - 1.925 = 0.125 mm and whose height represents the distance on the tooth D between the smaller base with width BMIN and the height at which to find the desired thickness BINC, which produces a score SI measuring 4.10 mm.

Knowing the lateral angle ALPHA of 4.25° and its cotangent (equivalent to 13.4618), we calculate the distance DS' (figure 6) with a simple geometric calculation:

$$DS' = 0.125 * 13.4618 = 1.68 \text{ mm}$$

Therefore, the target thickness BINC of the desired score SI of 4.10 mm (of the segment BM"; figure 6) is at a distance DS' of 1.68 mm from the first edge BM and, hence, at a distance XP' from the centre of rotation X of the scorer 12 of:

$$XP' = DX - DS' = 90.0 - 1.68 = 88.32 \text{ mm (figure 6)}$$

Therefore, the centre of rotation X of the scorer 12 of this first example must be positioned at this height from the work plane 15.

Knowing an absolute or calibration position of the scorer assembly, for example XP of 87.5 mm between the centre X of the scorer assembly in the machine and the work plane 15, it will be easy to calculate the displacement to which the scorer assembly must be subject in order to have a score SI of 4.10 mm compatible with the blade thickness SPL of 4.0 mm; namely, we will have to lower it by 0.82 mm (difference between 88.32 and 87.5 (XP' and XP) or difference between 2.5 and 1.68 (DS and DS')).

In the prior art, in case of use of the same scorer 12 following its sharpening, the remeasurement of some of the pieces of data that produced the first alignment is required, since, in fact, following the sharpening, the measurements BMIN and DX unequivocally change. Measurements that, as mentioned above, cannot be carried out automatically by the sole apparatuses 50 and 50'.

As mentioned above, according to the new method described herein, while entering the characteristic data of the tooth of the scorer, the virtual plane BMT is also defined at the same original distance DX of 90 mm, through which new widths BMIN' will be calculated following the repeated sharpening.

Said virtual plane BMT was appropriately stored together with the width BMIN of the first original edge BM and the other data necessary for the calculations in association with this particular scorer 12.

Hence, after the first use of a new scorer and the relative first alignment with the use of the characteristic data entered in the way discussed above, whenever the scorer 12 of our first example is mounted again in the machine and recognized, all the original characteristic data associated with it will be properly retrieved in order to carry out a new vertical alignment, without the need to carry out new measurements.

In addition, some tools, including some scorers 12, are equipped with a unique recognition electronic code or chip with the original manufacturer's data stored inside (including the diameter (distance DX = diameter/2)), the widths BMIN and BMAX and the angles ALPHA and BETA). Therefore, using this function, said manufacturer's data can be transferred via electronic means into the electronic unit (60) and/or into the Numerical Control; moreover that same scorer 12 will be recognized with all its characteristic data every time it is mounted on the machine and, hence, it will be possible to retrieve the characteristic data stored therein as well as take into account how many times it was sharpened. By using this very function, the virtual plane BMT to be used after the first sharpening could also be automatically established upon first use, for example coinciding with the distance DX between the summit of the tooth D and the centre of rotation X of the scorer 12.

Therefore, in order to calculate a new width BMIN' by means of the virtual plane BMT, we have to assume and define an average amount of material removed AS (figures 7, 8) during sharpening on the cutting face FT of, for example, 0.20 mm.

Knowing the lateral rake angle BETA of 3.82°, we calculate the new width BMIN' of the first edge BM by means of the virtual plane BMT by calculating the side of a right triangle having a side of 0.2 mm and an adjacent lateral rake angle BETA of precisely 3.82°, whose cotangent is 15.1611.

Therefore, by dividing the 0.20 mm cathetus by the cotangent of the lateral rake angle BETA, we obtain the other cathetus of the right triangle, whose value represents half the difference between the original width BMIN and the width BMIN' after sharpening. Therefore:

$$0.2 / 15.1611 = 0.013 \text{ mm}$$

which, multiplied by 2, represents the virtual decrease (0.026) in width BMIN' of the first edge BM of the tooth D after a single sharpening with removal of 0.20 mm (value that can, possibly, be stored for future use in calculations).

Furthermore, it should be pointed out, in particular, that this decrease in width obviously is the same in any point (or any plane perpendicular to the cutting face FT of the tooth D of the scorer), since the lateral rake angle BETA is obviously the same.

The new virtual width BMIN' of the new first edge will therefore be 3.824 mm, which may be stored, possibly, for possible future use in the calculations following a subsequent sharpening.

If we were now to combine this scorer 12 with a cutting blade 13 having a tooth thickness SPL of 4.20 mm, which would require a score SI (as previously established - but it could be changed depending on the processing required) of 4.30 mm, we would proceed by replicating the previous calculations, though using this new width BMIN' of the new virtual cutting edge. Therefore:

$$\text{BMIN}' / 2 = 3.824 / 2 = 1.912 \text{ mm}$$

Target width amount BINC'/2 on the cutting face FT' =:

$$\text{SI} / 2 = 4.30 / 2 = 2.15 \text{ mm}$$

Difference between SI / 2 and BMIN' / 2 = 2.15 - 1.912 = 0.238 mm

By multiplying this value by the cotangent of 4.25°, we have the new distance DS' from the virtual plane BMT on the smaller base of the original tooth D, where it is possible to have have a scoring width of 4.30 mm, namely:

$$\text{DS}' = 0.238 * 13.4618 = 3.20 \text{ mm.}$$

Then, by subtracting this amount of 3.20 mm from the original distance DX of 90.0 mm, we have a new distance XP' to be reached by the centre of rotation X of the scorer 12 in the machine in order to have a scoring width SI of 4.30 mm, which is compatible with the thickness of the cutting blade 13 with a tooth thickness SPL of 4.20 mm.

$$\text{XP}' = 90.0 - 3.20 = 86.80 \text{ mm}$$

If the known position XP of the centre of rotation X of the scorer assembly in the machine is 87.50 mm, it has to be lifted by 0.70 mm (87.50 - 86.80) to reach the right scoring height.

In case of a second sharpening detected by the Numerical Control of the machine following a second use, the calculations for a new vertical alignment can be performed by means of the virtual plane BMT considering the previous width BMIN', from which to subtract the decrease in thickness due to a new single sharpening, or the original value of BMIN, from which to subtract the decrease of two sharpening operations, and so on (in the event that a scorer is reinstalled in the machine without having been sharpened, the Numerical Control uses the previous data without the need to perform any calculation).

Obviously, the same calculations can be performed on multiple virtual planes, all perpendicular to the cutting face FT, such as a plane BMT' passing through the second original edge BM' defined by the distance DX' (DX minus the height HD of the tooth D); or, following a first alignment, like in the example described above (and, therefore, possibly following any alignment), it is possible to store and then subsequently use a new virtual plane BMT" passing through the aforementioned segment BM" with target thickness BINC of the score SI (figure 6), which, in the previous examples, was determined to be 4.10 mm at a distance XP 'of 88.32 mm from the centre of rotation X or 4.30 mm at a distance XP' of 86.80 mm from the same centre of rotation X. Possibly, further virtual planes BMT*, whose exact position (DX*) relative to the centre of rotation X or to the work plane 15 and whose dimension BCON* of a relative segment BM* are known, can be used after prior determination and storage.

Depending on the method used, the Numerical Control of the cutting machine must take into account how many times a given scorer 12 has been mounted in the machine following a sharpening in order to calculate, each time, the new virtual thickness thereof by means of the previously established virtual plane.

For example, in the case of a previous example, after 10 sharpening operations, the virtual width of the tooth D (BMIN n=10) will be smaller than the original piece of data BMIN by 0.26 mm (0.026 * 10) and, therefore, it will be 3.59 mm in the area of the previously stored virtual plane BMT.

Obviously, if, as a result of particular wear or accidental breakage of the tooth or of the teeth D of the scorer 12 due to impurities in the chipboard panels to be cut, greater amounts of removed material AS than the averagely established in the calculations are necessary, the result may be a score SI not corresponding to the established requirements and, therefore, a new plane BMT may be defined on the actual new smaller base with width BMIN of the new cutting face FT, also detecting the actual new distance DX from the centre of rotation X of the tool. This new virtual plane BMT (or, possibly, other similar virtual planes) will then be stored in place of the original one and, by means of this plane, new virtual thicknesses will be calculated for new and subsequent alignments.

Basically, having established and stored, upon first use of a scorer 12 or following a sharpening thereof, a virtual plane BMT, BMT', BMT" (or, possibly, a further virtual plane BMT*) associated with a precise segment with a respective known width BMIN, BMAX, BINC (or BCON*) at a respective specific distance DX, DX', XP' (or DX*) from the centre of rotation X of the scorer 12 and calculating, by means of this virtual plane BMT, BMT', BMT" (or BMT*), together with the characteristic data of the scorer 12, a desired scoring width (SI) on the work plane 15, it will be possible to perform a new vertical alignment position of the scorer 12 in combination with any blade 13 in a totally automatic manner without the need to perform any new measurement.

As one can see, by adopting a virtual plane BMT, BMT', BMT", BMT* on which to perform appropriate calculations and by storing the relative position thereof with respect to the centre of rotation X of the scorer 12 (or with respect to the work plane 15) together with other characteristic data of that same scorer 12, it is possible to perform, with a simple and inexpensive detecting apparatus, the automatic alignment of that scorer 12 with any cutting blade 13 for the entire life of those same tools until they are completely unused.

If there is no automatic apparatus for detecting the thickness SPL of the tooth D' of the cutting blade 13, like - for example - in case of use of the second apparatus 50', one can also store the characteristic data of the tooth (straight) D' of the cutting blade 13, which, in this case, concern, in addition to the relative original thickness SPL, the relative lateral rake angle and the relative average removal of material or the decrease in thickness following a single sharpening, in order to subsequently determine the new thickness SPL' of the tooth D' following a procedure similar to that described for the scorer, taking into account, also in this case, the number of sharpening operations carried out.

Obviously, in case of use of an apparatus 50 capable of measuring the actual thickness of the tooth D' of the cutting blade, the relative characteristic data will not be manually entered or stored.

Below is a SECOND practical and alternative EXAMPLE of calculation.

For this SECOND EXAMPLE of calculation for determining a vertical alignment, it is necessary to introduce an additional angle DELTA (figure 7), which will also be stored, possibly, upon first use of the scorer and is formed by the intersection between the virtual plane BMT and the upper face FS (figure 7) of the tooth D, as shown in figure 7.

For this SECOND calculation EXAMPLE we have that:

1) using the additional angle DELTA of 12°, we calculate the virtual decrease in height DIAL of the tooth D relative to the virtual plane BMT, which is: DIAL = AS / cotg 12° = 0.20 / 4.7046 = 0.042 mm;
2) using the lateral angle ALPHA of 4.25°, whose cotg is 13.4618, we calculate the virtual increase in thickness AUSP of tooth D due to its lateral inclination: AUSP = 0.042 / 13.4618 = 0.00311;
3) now we calculate the virtual decrease in thickness DIM of the tooth D due to the lateral rake angle BETA, which is equivalent to: DIM= AS /BETA cotg = 0.20 / 15.1611 = 0.013 (figure 8);
4) therefore, the virtual thickness of half the new smaller base of the tooth D of the scorer 12 will be: 1.925 (half original thickness) + 0.003 (virtual increase in thickness AUSP at the new virtual height of the tooth D due to the lateral angle ALPHA) - 0.013 (virtual decrease in thickness DIM of the tooth D due to the lateral rake angle BETA) = 1.915;

5) hence, the virtual thickness of the new smaller base of the tooth D will be 3.83 mm;

6) at this point, we perform a new calculation to define the virtual distance DS' of this smaller base of the tooth D from the plane on the tooth with the target amount BINC on the face FT' of 4.30 mm like in the example mentioned above for the pairing with a 4.20 mm blade;

7) therefore, 2.15 - 1.915 = 0.235 (horizontal side of the cathetus of the right triangle with the height being the sought distance)

8) 0.235 * Cog 4.25° = 0.235 * 13.4618 = 3.16 mm

9) this amount must be increased by the difference in height of the tooth D registered after the sharpening, which was calculated to be 0.042 mm;

10) so that, if the original smaller base of the tooth D was 90.00 mm from the centre of rotation X, the distance XP' from the centre of rotation X where the desired target thickness BINC is located will be: XP' = 90.00 - 0.042 - 3.16 = 86.80 mm;

As one can see, this amount XP' is exactly the same as we found in the FIRST EXAMPLE calculated by means of the virtual plane BMT at 90 mm from the axis X and with a smaller base with a thickness of 3.85 mm.

Basically, this calculation is based on geometric calculations that take into account the three angles ALPHA, BETA and DELTA characteristic of the tooth D, always referencing the initially and originally established and stored virtual plane BMT.

Obviously, following a further sharpening, the calculations could also use a new virtual plane passing through the new smaller base with a thickness of 3.83 mm at a distance from the X axis no longer of 90.0 mm but rather of 90.0 - 0.042 = 89.958 mm

This data must properly be stored in order to be retrieved after a subsequent use following a sharpening.

Obviously, this second calculation could be supplemented with a new decrease due to the upper sharpening with a removed upper layer AS' (figure 7), which, however, is difficult to quantify.

Basically, the decrease due to the removed upper layer AS' (trimming) is minimal in case of mere cleaning of the upper face FS (figure 7) of the tooth D; therefore, this technique could still be adopted with a possible control of the diameter of the scorer 12 (distance DX) and of the width of the smaller base of the tooth D after some sharpening.

Incidentally, the two aforesaid calculation examples are based on the calculation of new vertical alignment positions of the scorer 12, which are not perfect as they are based on virtual measurements and planes. However, given the absolute measurements involved, the few hundredths of difference between these alignments and those based on real measurements are irrelevant or hardly visible. In fact, since, on average, a scoring width of about five hundredths per side with respect to the thickness of the blade can be established for a perfect vertical alignment, the most the error will lead to is having a score of half a hundredth or at most one hundredth more or less per side, which is not visible or only slightly visible in the materials usually cut with the cutting machines involved in this operating method.

Moreover, it should be considered that, in any case, manual measurements of the widths of the tooth D of the scorer 12 at the smaller base or at the larger base of its cutting face inherently have a certain degree of approximation and error, which is certainly greater than that of the calculations, present in every measurement and every alignment in the machine.

Obviously, the recalculation of the repositioning of the scorer after each sharpening is based on the assumption that the sharpening machine (not shown) removes, on average, the same amount of material from the cutting face of the tooth.

It is also obvious that, if the operator, who is an expert in the field of panel cutting machines, is not satisfied with the results obtained, after a sharpening or after a certain number of successive sharpening operations carried out on the same scorer, he/she will be able to enter a correcting factor and to set and store a new virtual plane (like BMT, BMT', BMT" or another similar plane BMT*) to carry out new calculations starting from this new modified virtual plane.

Obviously, the above essentially concerns the vertical alignment between cutting blade 13 and scorer 12, since, as far as horizontal alignment is concerned, the teachings of the prior art are followed merely using the apparatuses 50 or 50' or other similar systems or methods that may even not be directly mounted in the machine but be external to it

As mentioned above, the operating method according to the invention can comprise a further step of storing and retrieving the number of sharpening operations carried out on the same scorer 12 in order to immediately calculate a new vertical alignment position between the scorer 12 and the cutting blade 13.

Furthermore, in the operating method according to the invention, the calculation of a new vertical alignment position between the scorer 12 and the cutting blade 13, following a further sharpening of the scorer 12, can be carried out using, as a reference, any virtual plane with the relative segment resulting from a previous calculation of the vertical alignment position between the scorer 12 and the cutting blade 13.

Furthermore, it should be pointed out that the calculations to determine a new alignment position subsequent to any sharpening can be performed at any time, even prior to the time of first use. To this regard, it should be pointed out that it would be possible, for instance, to calculate in advance for every scorer 12 a long series of virtual planes BMT" associated with relevant segments BM" equivalent to relative scoring widths BINC with vertical alignment positions XP' based on the relative thickness resulting from the various sharpening operations performed on the same scorer, for example, as follows:

BM" = BINC = 4,00      XP' = 124,9
BM" = BINC = 4,05      XP' = 124,85
BM" = BINC = 4,10      XP' = 124,80
BM" = etc. etc.

In this way, table charts could be created with the calculations already carried out, basically one for each sharpening, so that, depending on the number of sharpening operations undergone by that same scorer, the value of the distance XP' at which to position the centre of rotation X of the scorer with respect to the work plane 15 will be read in the relative table chart so as to obtain the scoring value BINC compatible with the thickness SPL of the cutting blade 13 to which it is paired.

Owing to the above, the advantages of the method according to the invention are evident and basically consist in not having to carry out new long and elaborate measurements of the teeth of the scorer after each sharpening, in order to obtain an optimal alignment between the cutting blade and the scorer itself.

In other words, the main advantage of this new and innovative method of vertical alignment between a blade and a scorer with teeth with a conical profile lies in that, thanks to the adoption of at least one virtual plane at a known distance from the centre of rotation of the scorer, it is possible to calculate, by means of that same virtual plane and of the relative segment, new virtual thicknesses of the tooth, which do not exist and cannot be physically measured, but which enable the calculation of new alignment positions of that same scorer paired with any cutting blade in a completely automatic manner, even after one or more sharpening operations.

## Claims

1.   An operating method for the horizontal and vertical alignment of a scorer (12) with a cutting blade (13) so as to obtain a cut without chipping; said scorer (12) and said cutting blade (13) belonging to a cutting assembly (10) of a cutting machine (1) for panels (PNL) having a work plane (15); said scorer (12) and said cutting blade (13) being fitted on a saw carriage (11) with respective central axes (H2), (H1) parallel to one another and respective rotation axes (X), (Y) and, in particular, for the correct alignment along an horizontal axis with direction and verses (F5) and along a vertical axis with direction and verses (F4) of said scorer (12) relative to said cutting blade (13), said scorer (12) being provided with a plurality of teeth (D) having a conical shape, the method comprising the following steps, not necessarily in the order indicated below:

(s1) a first step of measuring and/or entering in an electronic control unit (60) and/or in a Numeric Control of the cutting machine (1) first characteristic data of at least one tooth (D') of said cutting blade (13) and of at least one tooth (D) of said scorer (12); said first characteristic data being known or being measured by means of a manual measuring method and/or a measuring system (50, 50');

(s2) a second step of entering and/or of transfer via electronic means in the electronic control unit (60) and/or in the Numeric Control of the cutting machine (1), second characteristic data of at least one tooth (D) of said scorer (12), which are manually measured and/or are known as manufacturing data of said teeth (D); said second characteristic data consisting of data that define the conical geometric shape of the tooth (D) and a distance (DX) between the summit of the tooth (D) and the rotation centre (X) of the scorer (12) or a distance (DX') between the base of a cutting face (FT) of the tooth (D) and the rotation centre (X) of the same scorer (12) and a distance (XP) between the work plane (15) and the rotation centre (X) of the scorer (12) when that same scorer (12) is fitted on the machine or a relative distance (DS) between the summit of the tooth (D) of the scorer (12) and the work plane (15) or a relative distance (DS") between the base of the cutting face (FT) of the tooth (D) of the scorer (12) and the work plane (15) when that same scorer (12) is fitted on the machine;

(s3) a third step of horizontally adjusting/aligning the relative position between the cutting blade (13) and the scorer (12) along a horizontal axis according to directions and verses (F5) so as to cause the central axes (H1) and (H2) of said cutting blade (13) and of said scorer (12), respectively, to coincide;

(s4) a fourth step of vertically adjusting/aligning the position of said scorer (12), along a vertical axis according to directions and verses (F4), so as to obtain, with said scorer (12) in an operating position, a scoring width (SI) on said work plane (15) that is compatible with the thickness (SPL) of the tooth (D') of the cutting blade (13);

(s5) a fifth step of sharpening the teeth of said scorer (12) used in said steps (s1) - (s4) and of pairing, on the machine, said scorer (12) with any cutting blade (13) with respective teeth (D'); and

(s6) a sixth step of horizontally adjusting/aligning said scorer (12), following the sharpening of its teeth (D), with any cutting blade (13) with respective teeth (D'); said sixth horizontal adjustment/alignment step being carried out similarly to said first and third steps (s1), (s3);

the method being **characterized in that** it comprises the following additional steps, not necessarily in the order indicated below:

(s7) a seventh step of storing in the electronic control unit (60) and/or in the Numeric Control of the cutting machine (1) the characteristic data of the tooth (D) associated with each single scorer (12), which was previously entered;

(s8) an eighth step of defining and storing in the electronic control unit (60) and/or in the Numeric Control of the cutting machine (1) a virtual plane ((BMT); (BMT'); (BMT''); (BMT*)) on said scorer (12) having a known space position relative to at least one reference elements such as the working plane (15) or the rotation centre (X) of the scorer (12) with said scorer (12) fitted in the machine; said virtual plane ((BMT); (BMT'); (BMT''); (BMT*)) being perpendicular to the cutting face (FT) of said tooth (D) and passing through a segment ((BM); (BM'); (BM''); (BM*)) with a known width ((BMIN); (BMAX); (BINC); (BCON*)); said segment ((BM); (BM'); (BM''); (BM*)) lying or being definable on said cutting face (FT) of said tooth (D) or between more faces (FT) of said teeth (D); said eighth step (s8) being carried out upon first use of said scorer (12) on the machine or following a sharpening of said scorer (12);

(s9) a ninth step of calculation to define at least one new vertical alignment position along a vertical axis (F4) so as to obtain, with said scorer (12) in an operating position, a desired scoring width (SI) on the work plane (15) that is compatible with the thickness (SPL) of the tooth (D') of the cutting blade (13) with which said scorer (12) is paired; said calculation operations being carried out using said virtual plane ((BMT); (BMT'); (BMT''); (BMT*)) in association with said relative segment ((BM); (BM'); (BM''); (BM*)) and in association with the previously stored characteristic data of the tooth (D) associated with each single scorer (12); and

(s10) a tenth step of setting up the vertical movements of said scorer (12) along a vertical axis according to directions and verses (F4) in accordance with the calculations carried out in compliance with said ninth step (s9), thus completing the overall alignment between said scorer (12) and said cutting blade (13).

2. The operating method according to claim 1, wherein in said second step (s2) said second characteristic data of the at least one tooth (D) of said scorer (12) known as manufacturing data of said at least one tooth (D) is acquired electronically by the electronic control unit (60) and/or by the Numeric Control of the cutting machine (1) from a data chip or from an electronic code on said scorer (12).

3. The operating method according to claim 1 or 2, wherein the calculation to define a new vertical alignment position between said scorer (12) and said cutting blade (13), following a sharpening of said scorer (12), is carried out using, as a reference, any virtual plane ((BMT); (BMT'); (BMT''); (BMT*)) in association with its relative segment ((BM); (BM'); (BM''); (BM*)) resulting from a previous calculation or from a previous position of said vertical alignment position between said scorer (12) and said cutting blade (13).

4. The operating method according to claim 1 or 2, wherein it is foreseen for said scorer (12) the advance calculation of at least a table chart with a series of virtual planes (BMT'') associated with relevant segments (BM'') equivalent to relative scoring widths (BINC) and relative distances (XP') of the centre of rotation (X) of the same scorer (12) with respect to the work table (15); from said at least one table chart being possible to read the value of the distance (XP') at which to position the centre of rotation (X) of the scorer (12) with respect to the work plane (15) so as to obtain the scoring width (BINC) compatible with the thickness (SPL) of the cutting blade (13) to which it is paired.

5. The operating method according to any one of preceding claims 1-4, wherein there is provided a further step of storing and retrieving the number of sharpening operations carried out on the same scorer (12) in order to calculate and/or define a new vertical alignment position between said scorer (12) and said cutting blade (13).

6. The operating method according to claim 1 or 2, wherein said segment (BM) of known width (BMIN) and said segment (BM') of known width (BMAX) are, respectively, the smaller base and the larger base of said cutting face (FT) of a conical trapezoidal type scorer (12).

7. The operating method according to claim 1 or 2, wherein said segment (BM) of known width (BMIN) and said segment (BM') of known width (BMAX) are, respectively, the distance between the summits of said cutting faces (FT) of the teeth (D) of the scorer (12) during its rotation and the larger base of said cutting face (FT) of the tooth (D) of an alternate conical type scorer (12).

8. The operating method according to claim 1-3, wherein said segment (BM") is a segment having a known scoring thickness (BINC) of said cutting face (FT) of said tooth (D) or of said cutting faces (FT) of said teeth (D) of said scorer (12).

9. The operating method according to claim 1 or 2, wherein said segment (BM*) is a segment with known width (BCON*) of the cutting face (FT) of said tooth (D) or is definable between said cutting faces (FT) of said teeth (D) of said scorer (12).

10. The operating method according to any one of the previous claims, comprising a further step to memorize and recall of the characteristic data of the tooth (D') of the cutting blade (13) to calculate a relative new tooth thickness (SPL) following the number of sharpening being carried out on that same cutting blade (13).

**Patentansprüche**

1. Betriebsverfahren zum horizontalen und vertikalen Ausrichten eines Ritzers (12) mit einer Schneidklinge (13) zur Erzielung eines ausbruchfreien Schnitts; wobei der genannte Ritzer (12) und die genannte Schneidklinge (13) zu einer Schneidgruppe (10) einer Aufteilsäge (1) für Platten (PNL) mit einem Arbeitstisch (15) gehören; wobei der genannte Ritzer (12) und die genannte Schneidklinge (13) auf einem Sägeaggregat (11) mit jeweiligen zueinander parallelen Mittelachsen (H2), (H1) und jeweiligen Rotationsachsen (X), (Y) montiert sind, und insbesondere zum korrekten Ausrichten des genannten Ritzers (12) in Bezug auf die genannte Schneidklinge (13) entlang einer horizontalen Achse mit Richtung und Orientierung (F5) und entlang einer vertikalen Achse mit Richtung und Orientierung (F4), wobei der genannte Ritzer (12) mit einer Vielzahl von Zähnen (D) mit konischem Profil versehen ist, wobei das Verfahren die folgenden Schritte umfasst, auch wenn nicht ausdrücklich in der aufgeführten Reihenfolge:

(s1) ein erster Schritt zur Erfassung und/oder Eingabe erster charakteristischer Daten mindestens eines Zahns (D') der genannten Schneidklinge (13) und mindestens eines Zahns (D) des genannten Ritzers (12) in eine elektronische Steuereinheit (60) und/oder in die numerische Steuerung der Aufteilsäge (1); wobei die genannten ersten charakteristischen Daten bekannt sind oder mittels eines manuellen Erfassungsverfahrens und/oder eines Erfassungssystems (50, 50') ermittelt werden;

(s2) ein zweiter Schritt zur Eingabe und/oder der elektronischen Übertragung von zweiten charakteristischen Daten mindestens eines Zahns (D) des genannten Ritzers (12) in die elektronische Steuereinheit (60) und/oder in die numerische Steuerung der Aufteilsäge (1), wobei diese zweite Daten manuell erfasst und/oder als Konstruktionsdaten der genannten Zähne (D) bekannt sind; wobei die genannten zweiten charakteristischen Daten aus Angaben bestehen, die die konische geometrische Form des Zahns (D) definieren, sowie aus einem Abstand (DX) zwischen der Zahnspitze (D) und dem Rotationszentrum (X) des Ritzers (12) oder einem Abstand (DX') zwischen der Basis einer Schneidfläche (FT) des Zahns (D) und dem Rotationszentrum (X) des Ritzers (12) und einem Abstand (XP) zwischen der Arbeitstischfläche (15) und der Rotationsachse (X) des Ritzers (12), wenn derselbe Ritzer in der Maschine montiert ist, oder einem relativen Abstand (DS) zwischen der Zahnspitze (D) des Ritzers (12) und der Arbeitstischfläche (15) oder einem relativen Abstand (DS") zwischen der Basis der Schneidfläche (FT) des Zahns (D) des Ritzers (12) und der Arbeitstischfläche (15), wenn derselbe Ritzer (12) in der Maschine montiert ist;

(s3) ein dritter Schritt zur horizontalen Einstellung/Ausrichtung der relativen Position zwischen der Schneidklinge (13) und dem Ritzer (12) entlang einer horizontalen Achse mit Richtung und Orientierung (F5), um die Mittelachsen (H1) und (H2) der genannten Schneidklinge (13) und des genannten Ritzers (12) zur Deckung zu bringen;

(s4) ein vierter Schritt zur vertikalen Einstellung/Ausrichtung der Position des genannten Ritzers (12) entlang einer vertikalen Achse mit Richtung und Orientierung (F4), der geeignet ist, mit dem genannten Ritzer (12) in Arbeitsstellung, eine Ritzbreite (SI) auf der genannten Arbeitstischfläche (15) zu erzielen, die mit der Zahndicke (SPL) des Zahns (D') der Schneidklinge (13) kompatibel ist;

(s5) ein fünfter Schritt zum Schärfen der Zähne des genannten Ritzers (12), der in den genannten Schritten (s1) - (s4) verwendet wurde, sowie zum Einbau dieses Ritzers (12) in die Maschine in Kombination mit einer beliebigen Schneidklinge (13) mit entsprechenden Zähnen (D'); und

(s6) ein sechster Schritt zur horizontalen Einstellung/Ausrichtung zwischen dem genannten Ritzer (12) nach dem Schärfen seiner Zähne (D) und einer beliebigen Schneidklinge (13) mit entsprechenden Zähnen (D'); wobei der genannte sechste Schritt zur horizontalen Einstellung/Ausrichtung analog zu den genannten ersten und dritten Schritten (s1), (s3) durchgeführt wird;

das Verfahren **dadurch gekennzeichnet ist, dass** es die folgenden zusätzlichen Schritte vorsieht, auch wenn nicht ausdrücklich in der aufgeführten Reihenfolge:

(s7) ein siebter Schritt zur Speicherung der charakteristischen Daten des Zahns (D), die jedem einzelnen Ritzer (12) zugeordnet sind, in der elektronischen Steuereinheit (60) und/oder in der numerischen Steuerung der Aufteilsäge (1), wobei diese Daten zuvor eingegeben wurden;

(s8) ein achter Schritt zur Definition und Speicherung in der elektronischen Steuereinheit (60) und/oder in der numerischen Steuerung der Aufteilsäge (1) einer virtuellen Ebene ((BMT); (BMT'); (BMT"); (BMT*)) auf dem genannten Ritzer (12) mit einer bekannten räumlichen Position in Bezug auf mindestens ein Referenzelement, wie die Arbeitstischfläche (15) oder das Rotationszentrum (X) des Ritzers (12), wenn der genannte Ritzer (12) in der Maschine montiert ist; wobei die genannte virtuelle Ebene ((BMT); (BMT'); (BMT"); (BMT*)) senkrecht zu einer Schneidfläche (FT) des genannten Zahns (D) verläuft und durch ein Segment ((BM); (BM'); (BM", (BM*)) mit bekannter Breite ((BMIN); (BMAX); (BINC); (BCON*)) verläuft; wobei das genannte Segment ((BM); (BM'); (BM", (BM*)) auf der genannten Schneidfläche (FT) des genannten Zahns (D) oder zwischen mehreren Schneidflächen (FT) der Zähne (D) liegt oder bestimmbar ist; wobei der genannte achte Schritt (s8) beim ersten Einsatz des Ritzers (12) in der Maschine oder nach einer Schärfung des genannten Ritzers (12) durchgeführt wird;

(s9) ein neunter Berechnungsschritt zur Bestimmung mindestens einer neuen Ausrichtposition entlang der vertikalen Achse (F4), um, mit dem genannten Ritzer (12) in Arbeitsstellung, eine gewünschte Ritzbreite (SI) auf der Arbeitstischfläche (15) zu erzielen, die mit der Zahnbreite (SPL) des Zahns (D') der Schneidklinge (13), der der Ritzer (12) zugeordnet ist, kompatibel ist; wobei diese Berechnungen unter Verwendung der genannten virtuellen Ebene ((BMT); (BMT'); (BMT"); (BMT*)) in Verbindung mit dem entsprechenden Segment ((BM); (BM'); (BM", (BM*)) bekannter Breite und den zuvor gespeicherten charakteristischen Zahndaten (D) jedes einzelnen Ritzers (12) durchgeführt werden;

(s10) ein zehnter Schritt zur Ansteuerung der vertikalen Bewegung des genannten Ritzers (12) entlang der vertikalen Achse mit Richtung und Orientierung (F4) gemäß den in dem neunten Schritt (s9) durchgeführten Berechnungen, wodurch die Gesamtausrichtung zwischen dem genannten Ritzer (12) und der genannten Schneidklinge (13) abgeschlossen wird.

2. Betriebsverfahren nach Anspruch 1, wobei in dem genannten zweiten Schritt (s2) die genannten zweiten charakteristischen Daten mindestens eines Zahns (D) des genannten Ritzers (12), die als Konstruktionsdaten des genannten mindestens einen Zahns (D) bekannt sind, elektronisch von der elektronischen Steuereinheit (60) und/oder von der numerischen Steuerung der Aufteilsäge (1) aus einem auf dem Ritzer (12) angebrachten Datenchip oder elektronischen Code ausgelesen werden.

3. Betriebsverfahren nach Anspruch 1 oder Anspruch 2, wobei die Berechnung zur Bestimmung einer neuen vertikalen Ausrichtposition zwischen dem genannten Ritzer (12) und der genannten Schneidklinge (13) nach einer Schärfung des genannten Ritzers (12) unter Bezugnahme auf eine beliebige virtuelle Ebene ((BMT); (BMT'); (BMT"); (BMT*)) durchgeführt wird, die dem entsprechenden Segment ((BM); (BM'); (BM'); (BM*) zugeordnet ist, das sich aus einer vorherigen Berechnung oder einer vorherigen Positionierung der genannten vertikalen Ausrichtposition des genannten Ritzers (12) ergibt.

4. Betriebsverfahren nach Anspruch 1 oder Anspruch 2, wobei für den genannten Ritzer (12) die vorherige Berechnung von mindestens einer Tabelle mit einer Reihe von virtuellen Ebenen (BMT") vorgesehen ist, die entsprechenden Segmenten (BM") zugeordnet sind, die äquivalent zu entsprechenden Ritzbreiten (BINC) und den zugehörigen Abständen (XP') des Rotationszentrums (X) desselben Ritzers (12) in Bezug auf die Arbeitstischfläche (15) sind; aus dieser mindestens einen Tabelle kann der Wert des Abstands (XP') abgelesen werden, an dem das Rotationszentrum (X) des Ritzers (12) relativ zur Arbeitstischfläche (15) positioniert werden muss, um eine Ritzbreite (BINC) zu erhalten, die mit der Dicke (SPL) der Schneidklinge (13), der er zugeordnet ist, kompatibel ist.

5. Betriebsverfahren nach einem der vorstehenden Ansprüche 1-4, wobei ein weiterer Schritt zur Speicherung und zum Abruf der Anzahl der am selben Ritzer (12) durchgeführten Schärfungen vorgesehen ist, um eine neue vertikale Ausrichtposition zwischen dem genannten Ritzer (12) und der genannten Schneidklinge (13) zu berechnen und/oder festzulegen.

6. Betriebsverfahren nach Anspruch 1 oder Anspruch 2, wobei das genannte Segment (BM) bekannter Breite (BMIN) und das genannte Segment (BM') bekannter Breite (BMAX) jeweils die kleinere und die größere Basis der genannten Schneidfläche (FT) des Zahns (D) eines Ritzers (12) vom trapezförmigen konischen Typs darstellen.

7. Betriebsverfahren gemäß Anspruch 1 oder Anspruch 2, wobei das genannte Segment (BM) bekannter Breite (BMIN) und das genannte Segment (BM') bekannter Breite (BMAX) jeweils den Abstand zwischen den Schneidkanten an der Spitze der genannten Schneidflächen (FT) der Zähne (D) während der entsprechenden Rotation des Ritzers (12) und der größeren Basis der genannten Schneidfläche (FT) des Zahns (D) eines Ritzers (12) vom alternierenden konischen Typs darstellen.

8. Betriebsverfahren nach den Ansprüchen 1-3, wobei das genannte Segment (BM") ein Segment der bekannten Schnittbreite (BINC) der genannten Schneidfläche (FT) des genannten Zahns (D) oder der genannten Schneidflächen (FT) der genannten Zähne (D) des genannten Ritzers (12) ist.

9. Betriebsverfahren nach Anspruch 1 oder Anspruch 2, wobei das genannte Segment (BM*) ein Segment bekannter Breite (BCON *) der genannten Schneidfläche (FT) des genannten Zahns (D) ist oder zwischen den genannten Schneidflächen (FT) der genannten Zähne (D) des genannten Ritzers (12) bestimmbar ist.

10. Betriebsverfahren nach einem der vorstehenden Ansprüche, wobei ein weiterer Schritt zur Speicherung und zum Abruf der charakteristischen Daten des Zahns (D') der Klinge (13) vorgesehen ist, um die entsprechende neue Dicke (SPL) nach der Anzahl der Schärfungen, denen die genannte Klinge (13) unterzogen wurde, zu berechnen.

## Revendications

1. Procédé opérationnel pour aligner horizontalement et verticalement un inciseur (12) avec une lame de coupe (13) pour obtenir une coupe sans éclats ; ledit inciseur (12) et ladite lame de coupe (13) appartenant à une unité de coupe (10) d'une scie à panneaux (PNL) (1) ayant un plan de travail (15) ; ledit inciseur (12) et ladite lame de coupe (13) étant montés sur un chariot porte-lame (11) avec des axes centraux respectifs (H2), (H1) parallèles entre eux et des axes de rotation respectifs (X), (Y), et en particulier pour l'alignement correct le long d'un axe horizontal de direction et sens (F5) et le long d'un axe vertical de direction et sens (F4) dudit inciseur (12) par rapport à ladite lame de coupe (13), ledit inciseur (12) étant pourvu d'une pluralité de dents (D) ayant un profil conique, ledit procédé comprenant les étapes suivantes, également non expressément dans l'ordre énuméré :

(s1) une première étape de détection et/ou d'introduction dans une unité de commande électronique (60) et/ou dans une commande numérique de la scie à panneaux (1) de premières données caractéristiques d'au moins une dent (D') de ladite lame de coupe (13) et d'au moins une dent (D) dudit inciseur (12) ; lesdites premières données caractéristiques étant connues ou détectées au moyen d'un procédé de détection manuelle et/ou d'un système de détection (50, 50') ;

(s2) une deuxième étape d'insertion et/ou de transfert par des moyens électroniques dans l'unité de commande électronique (60) et/ou dans la commande numérique de la scie à panneaux (1), de deuxièmes données caractéristiques d'au moins une dent (D) dudit inciseur (12) détectées manuellement et/ou connues comme données de construction desdites dents (D) ; lesdites secondes données caractéristiques étant constituées par des données définissant la figure géométrique de forme conique de la dent (D) et une distance (DX) entre le sommet de la dent (D) et le centre de rotation (X) de l'inciseur (12) ou une distance (DX') entre la base d'une face de coupe (FT) de la dent (D) et le centre de rotation (X) de l'inciseur (12) lui-même et une distance (XP) entre le plan de travail (15) et l'axe de rotation (X) de l'inciseur (12) lorsque ce même inciseur est monté dans la machine ou une distance relative (DS) entre le sommet de la dent (D) de l'inciseur (12) et le plan de travail (15) ou une distance relative (DS") entre la base de la face de coupe (FT) de la dent (D) de l'inciseur (12) et le plan de travail (15) lorsque ce même inciseur (12) est monté dans la machine ;

(s3) une troisième étape d'ajustement/alignement horizontal de la position relative entre la lame de coupe (13) et l'inciseur (12) le long d'un axe horizontal de direction et de sens (F5) pour faire coïncider les axes centraux (H1) et (H2) de ladite lame de coupe (13) et, respectivement, dudit inciseur (12) ;

(s4) une quatrième étape d'ajustement/alignement vertical de la position dudit inciseur (12), le long d'un axe vertical de direction et sens (F4) apte à obtenir, lorsque ledit inciseur (12) est en position opérationnelle, une largeur d'incision (SI), sur ledit plan de travail (15), compatible avec l'épaisseur (SPL) de la dent (D') de la lame de coupe (13) ;

(s5) une cinquième étape d'affûtage des dents dudit inciseur (12) utilisé dans lesdites étapes (s1) - (s4) et d'appariement dans la machine dudit inciseur (12) avec toute lame de coupe (13) avec des dents respectives (D') ; et

(s6) une sixième étape d'ajustement/alignement horizontal entre ledit inciseur (12) après l'affûtage de ses dents (D) et toute lame de coupe (13) avec des dents respectives (D') ; ladite sixième étape d'ajustement/alignement horizontal étant effectuée de manière analogue auxdites première et troisième étapes (s1), (s3) ;

le procédé étant **<u>caractérisé par le fait qu'</u>**il comprend les étapes supplémentaires suivantes, également non expressément dans l'ordre énuméré :

(s7) une septième étape de stockage dans l'unité de commande électronique (60) et/ou dans la commande numérique de la scie à panneaux (1), des données caractéristiques de la dent (D) associées à chaque inciseur (12) individuel, précédemment introduites ;

(s8) une huitième étape de définition et de stockage dans l'unité de commande électronique (60) et/ou dans la commande numérique de la scie à panneaux (1) d'un plan virtuel ((BMT) ; (BMT') ; (BMT") ; (BMT*)) sur ledit inciseur (12) ayant une position spatiale connue par rapport à au moins un élément de référence tel que le plan de travail (15) ou le centre de rotation (X) de l'inciseur (12), lorsque ledit inciseur (12) est monté dans la machine ; ledit plan virtuel ((BMT) ; (BMT') ; (BMT") ; (BMT*)) étant perpendiculaire à une face de coupe (FT) de ladite dent (D) et passant par un segment ((BM) ; (BM') ; (BM"), (BM*)) de largeur connue ((BMIN) ; (BMAX) ; (BINC) ; (BCON*)) ; ledit segment ((BM) ; (BM') ; (BM"), (BM*)) se trouvant ou pouvant être déterminé sur ladite face de coupe (FT) de ladite dent (D) ou entre plusieurs faces de coupe (FT) desdites dents (D) ; ladite huitième étape (s8) étant réalisée lors de la première utilisation dans la machine dudit inciseur (12) ou suite à un affûtage dudit inciseur (12) ;

(s9) une neuvième étape de calcul pour définir au moins une nouvelle position d'alignement le long de l'axe vertical (F4) afin d'obtenir, lorsque ledit inciseur (12) est en position opérationnelle, une largeur d'incision (SI) souhaitée sur le plan de travail (15) compatible avec l'épaisseur (SPL) de la dent (D') de la lame de coupe (13) à laquelle ledit inciseur (12) est apparié ; lesdites opérations de calcul étant effectuées à l'aide dudit plan virtuel ((BMT) ; (BMT') ; (BMT") ; (BMT*)) en association avec ledit segment relatif ((BM) ; (BM') ; (BM"), (BM*)) de largeur connue et avec les données caractéristiques de la dent (D) associées à chaque inciseur (12) individuel préalablement stockées ; et

(s10) une dixième étape d'instruction du mouvement vertical dudit inciseur (12) le long de l'axe vertical de direction et sens (F4) conformément aux calculs effectués selon ladite neuvième étape (s9), complétant ainsi l'alignement global entre ledit inciseur (12) et ladite lame de coupe (13).

2. Procédé opérationnel selon la revendication 1, dans lequel, dans ladite deuxième étape (s2), lesdites deuxièmes données caractéristiques d'au moins une dent (D) dudit inciseur (12), connues en tant que données de construction de ladite au moins une dent (D), sont acquises électroniquement par l'unité de commande électronique (60) et/ou par la commande numérique de la scie à panneaux (1), à partir d'une puce de données ou d'un code électronique inséré sur l'inciseur (12).

3. Procédé opérationnel selon la revendication 1 ou la revendication 2, dans lequel le calcul pour définir une nouvelle position d'alignement vertical entre ledit inciseur (12) et ladite lame de coupe (13), suite à un affûtage dudit inciseur (12), est effectué en prenant comme référence tout plan virtuel ((BMT) ; (BMT') ; (BMT") ; (BMT*)) associé au segment relatif ((BM) ; (BM') ; (BM"), (BM*)) résultant d'un précédent calcul ou d'un précédent positionnement de ladite position d'alignement vertical dudit inciseur (12).

4. Procédé opérationnel selon la revendication 1 ou la revendication 2, dans lequel il est prévu pour ledit inciseur (12) le calcul préliminaire d'au moins une table avec une série de plans virtuels (BMT") associés à des segments relatifs (BM") équivalents à des épaisseurs d'incision (BINC) relatives et des distances (XP') relatives du centre de rotation (X) du même inciseur (12) par rapport au plan de travail (15) ; sur ladite au moins une table, il est possible de lire la valeur de la distance (XP') à laquelle le centre de rotation (X) de l'inciseur (12) par rapport au plan de travail (15) doit être positionné pour obtenir une largeur d'incision (BINC) compatible avec l'épaisseur (SPL) de la lame de coupe (13) à laquelle il est apparié.

5. Procédé opérationnel selon l'une quelconque des revendications précédentes 1 à 4, dans lequel il est prévu une étape supplémentaire de stockage et de rappel du nombre d'affûtages effectués sur le même inciseur (12) pour calculer et/ou définir une nouvelle position d'alignement vertical entre ledit inciseur (12) et ladite lame de coupe (13).

6. Procédé opérationnel selon la revendication 1 ou la revendication 2, dans lequel ledit segment (BM) de largeur connue (BMIN) et ledit segment (BM') de largeur connue (BMAX) représentent respectivement la petite base et la grande base de ladite face de coupe (FT) de la dent (D) d'un inciseur (12) de type conique trapézoïdal.

7. Procédé opérationnel selon la revendication 1 ou la revendication 2, dans lequel ledit segment (BM) de largeur connue (BMIN) et ledit segment (BM') de largeur connue (BMAX) représentent respectivement la distance entre les arêtes de coupe au sommet desdites faces de coupe (FT) des dents (D) lors de la rotation relative de l'inciseur (12) et la grande base de ladite face de coupe (FT) de la dent (D) d'un inciseur (12) de type conique alternatif.

8. Procédé opérationnel selon les revendications 1 à 3, dans lequel ledit segment (BM") est un segment de largeur d'incision connue (BINC) de ladite face de coupe (FT) de ladite dent (D) ou desdites faces de coupe (FT) desdites dents (D) dudit inciseur (12).

9. Procédé opérationnel selon la revendication 1 ou la revendication 2, dans lequel ledit segment (BM*) est un segment de largeur connue (BCON*) de ladite face de coupe (FT) de ladite dent (D) ou déterminable entre lesdites faces de coupe (FT) desdites dents (D) dudit inciseur (12).

10. Procédé opérationnel selon l'une quelconque des revendications précédentes, dans lequel il est prévu une étape supplémentaire de stockage et de rappel des données caractéristiques de la dent (D') de la lame (13) afin de calculer la nouvelle épaisseur (SPL) relative suite au nombre d'affûtages auxquels ladite lame (13) a été soumise.

*Fig.1*

*Fig.2*

Fig.3

Fig.4

Fig.5

Fig.6

Fig 7

Fig 8

**EP 4 494 794 B1**

**Patent documents cited in the description**

- EP 3263258 B1